# FASCICULE DE BREVET EUROPEEN

(11) **EP 0 427 999 B1**
(45) Date de publication et mention de la délivrance du brevet: **09.02.1994**
(21) Numéro de dépôt: 90120723.3
(22) Date de dépôt: 29.10.1990
(51) Int. Cl.: B62D 55/065, B62D 55/084

(54) **Véhicule d'intervention à configuration variable pour sols accidentés**
Einsatzfahrzeug mit variabler Konfiguration für unebenes Gelände
Intervention vehicle with variable configuration for undulating terrain

(30) Priorité: 31.10.1989 FR 8914281
(43) Date de publication de la demande: 22.05.1991
(73) Titulaire: ALCATEL ALSTHOM COMPAGNIE GENERALE D'ELECTRICITE, 75382 Paris Cédex 08 (FR)
(72) Inventeur: Argouarc'H, Jean René Lab.de Marcoussis Dép D.I.N., F-91460 Marcoussis (FR)
(74) Mandataire: Weinmiller, Jürgen

(56) Documents cités:
- EP-A- 0 206 930
- FR-A- 2 529 157
- FR-A- 2 529 157
- FR-A- 2 610 885
- US-A- 4 702 331

## Description

La présente invention concerne un véhicule d'intervention à configuration variable pour sols accidentés selon le préambule de la revendication 1.

Un tel vehicule est connu du document FR-A-2 529 157.

Elle trouve notamment application dans des installations industrielles lorsqu'une intervention est nécessaire mais serait dangereuse ou impossible pour un opérateur humain. Un véhicule selon la présente invention peut alors être utilisé. Pour cela il peut être muni d'instruments adéquats tels que des caméras vidéo, des appareils de mesure, et des outils, avec l'aide desquels on constitue un robot.

Un robot selon la présente invention peut être notamment utile dans une centrale nucléaire ou dans une usine de retraitement de combustibles nucléaires lorsque des réparations ou des inspections doivent être faites dans des zones qui sont soumises à de fortes intensités de radiations ionisantes après certains incidents de fonctionnement. De tels robots peuvent cependant être également utiles dans d'autres industries, par exemple dans l'industrie chimique en présence de risques d'explosion, ou pour des missions de sécurité civile ou de surveillance de sites, ou dans le cadre de la robotique de service, par exemple pour des opérations de nettoyage, dans l'agriculture ou dans les activités militaires.

Une qualité importante d'un véhicule de ce genre est son aptitude à se déplacer sur un sol accidenté, c'est-à-dire présentant des obstacles à franchir. Ces derniers peuvent présenter des formes très diverses, par exemple un escalier qui a été prévu pour l'homme et qui doit être monté ou descendu, ou un tuyau tombé sur un plancher. La sûreté de tels véhicules lors du franchissement de tels obstacles présente deux aspects principaux. L'un est la stabilité, c'est-à-dire l'aptitude du véhicule à ne pas basculer sous son propre poids et celui de sa charge. L'autre est l'adhérence et concerne chacun des propulseurs de ce véhicule, c'est-à-dire des organes qui prennent appui sur le sol pour soutenir et faire progresser ou immobiliser le véhicule. L'adhérence est l'aptitude de ces propulseurs à ne pas glisser excessivement au contact du sol, même si ce dernier présente localement un état de surface défavorable.

Une autre qualité importante pour un tel véhicule concerne son encombrement, notamment transversal et longitudinal, qui devrait être suffisamment petit pour que le véhicule puisse emprunter, à l'intérieur d'un bâtiment, divers couloirs ou passages plus ou moins étroits qui ont été seulement prévus pour un opérateur humain.

Une autre qualité importante est que le véhicule soit aussi léger que possible.

Divers véhicules ont été conçus pour présenter une bonne aptitude à franchir des obstacles avec sûreté. Un premier véhicule est connu par le brevet européen EP 197 020 des ACEC qui décrit un véhicule télécommandé constituant un robot pour inspections et interventions en milieux hostiles. Il possède un ensemble moteur, c'est-à-dire des moyens d'entraînement et de freinage, qui est intégré dans un châssis principal constituant un corps de véhicule. Il possède aussi des moyens pour transmettre le mouvement d'avance défini par cet ensemble moteur à des chenilles qui sont portées à l'extérieur du châssis par des propulseurs portés par ce corps de véhicule. Il est équipé de deux propulseurs à l'avant et à l'arrière sur chacun desquels sont montées deux chenilles droite et gauche. Chaque propulseur peut être incliné par rapport au corps de véhicule à partir de celui-ci. De ce fait, si le robot rencontre un obstacle frontal de hauteur modérée et sensiblement constante selon la direction transversale, il pourra le surmonter en conservant une position quasiment horizontale du corps de véhicule. Si par contre il rencontre un obstacle frontal de forte déclivité transversale, il risque en le franchissant de basculer sur le côté.

Un deuxième véhicule connu se déplace à l'aide de pieds qui ont une configuration de type "araignée" et qui lui permettent de franchir des petits obstacles de formes très variées. Mais il se déplace très lentement parce qu'un déplacement simultané de plusieurs pieds de l'appareil n'est généralement pas possible.

Un troisième véhicule connu comporte quatre propulseurs chenillés inclinables par rapport au corps de ce véhicule. La chenille de chacun de ces propulseurs est guidée par un certain nombre d'organes de guidage, notamment par deux pignons dont l'un est un pignon moteur pour entraîner le mouvement d'avance de cette chenille. Ces organes sont portés par une carcasse qui constitue la structure de ce propulseur et qui est assemblée au corps du véhicule de manière à permettre d'incliner le propulseur autour d'un axe transversal. Le corps de ce véhicule porte des ensembles moteurs d'avance et d'inclinaison comportant des moteurs pour entraîner les uns les pignons moteur par l'intermédiaire de systèmes de transmission mécaniques et les autres les mouvements d'inclinaison des propulseurs, respectivement. Ces ensembles comportent aussi des freins pour contrôler ces mouvements. Le corps du véhicule porte en outre des batteries d'alimentation en énergie électrique et des moyens de commande pour les ensembles moteurs.
Ce troisième véhicule connu a été proposé par la firme japonaise Mitsubishi sous le nom de MRV (Multifunctional Robot Vehicle) et a été décrit pages 425 et 426 du compte rendu de conférence "85 ICAR International Conference on Advanced Robotics, September 9-10, 1985, Tokyo, Japan organized by : Robotics Society of Japan, The Society of Biomechanisms, Japan Industrial Robot Association".
Il semble permettre de franchir des obstacles de formes connues et sa vitesse moyenne de progression semble pouvoir être bien supérieure à celle du deuxième véhicule connu précédemment mentionné.
Il semble cependant ne présenter les qualités importantes précédemment mentionnées qu'à un degré insuffisant.

La demande de brevet européen EP-A-0 206 930 décrit un quatrième véhicule connu comportant deux paires de propulseurs avant et arrière, portées par des parties avant et arrière du corps de véhicule et constituées chacune de deux propulseurs à chenilles l'un à droite l'autre à gauche. Chaque propulseur comporte deux roues, avant et arrière, une chenille supportée et entraînée par ces roues, et des moyens d'appui de la chenille entre ces deux roues.

Ce véhicule connu présente une configuration variable en ce sens que les parties avant et arrière du corps de véhicule sont articulées l'une par rapport à l'autre autour d'un axe transversal médian. Cet axe coïncide avec celui des roues arrières de la paire de propulseurs avant et avec l'axe des roues avant de la paire arrière.

Un corps non chenillé est porté par ces parties avant et arrière de manière à pouvoir être déplacé angulairement par rotation autour du même axe transversal médian.

Il est indiqué qu'un déplacement du centre de gravité du véhicule, et que des modifications de la position angulaire mutuelle des deux parties du corps de véhicule permettent de franchir des obstacles sans compromettre la stabilité du véhicule.

Quoique ce véhicule connu semble devoir effectivement présenter une aptitude à franchir des obstacles sans perte de sa stabilité, cette aptitude apparaît devoir rester limitée.

La présente invention a notamment pour but de réaliser de manière simple un véhicule d'intervention apte à franchir avec une sûreté accrue des obstacles variés, tout en conservant un encombrement limité lui permettant d'emprunter des passages prévus pour l'homme. Elle vise aussi à permettre, par montage d'outils sur un tel véhicule, de réaliser un robot apte à effectuer des interventions dans des bâtiments divers, notamment lorsqu'un accident a rendu ces locaux inacessibles à un opérateur humain.

Dans ces buts, elle a pour objet un véhicule d'intervention à configuration variable pour sols accidentés selon la revendication 1.

Dispositions avantageuses sont décrites dans les revendications 2-4.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs. Lorsqu'un même élément est représenté sur plusieurs figures il y est désigné par le même signe de référence.

La figure 1 représente une vue de côté d'un véhicule selon la présente invention.

La figure 2 représente une vue de derrière du même véhicule.

La figure 3 représente une vue de côté d'un propulseur du même véhicule, dont les capots extérieurs ont été enlevés pour montrer les moyens de transmission internes de ce propulseur.

La figure 4 représente une vue d'un flanc latéral du corps inférieur du même véhicule, sans propulseurs ni éléments moteurs ou de commande.

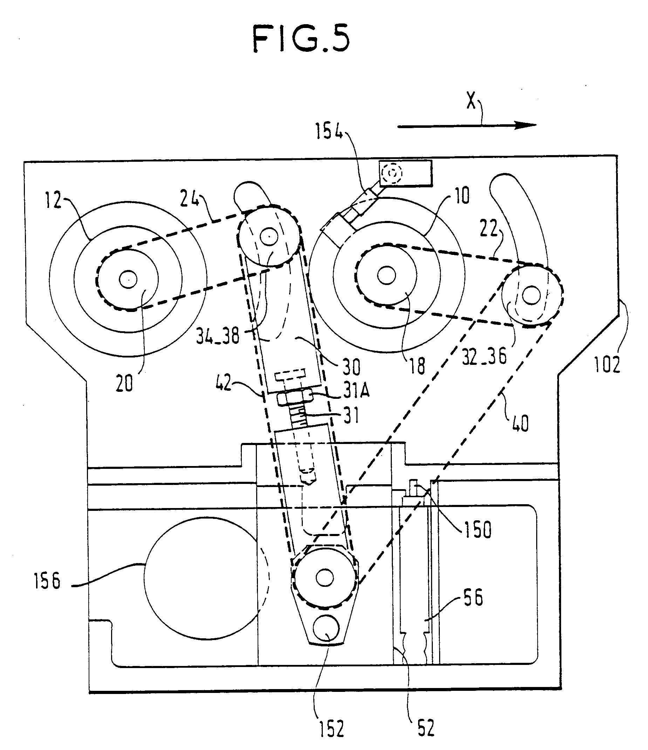

La figure 5 représente une vue d'une plaque d'assemblage de propulseur constituant une partie du flanc latéral de la figure 4.

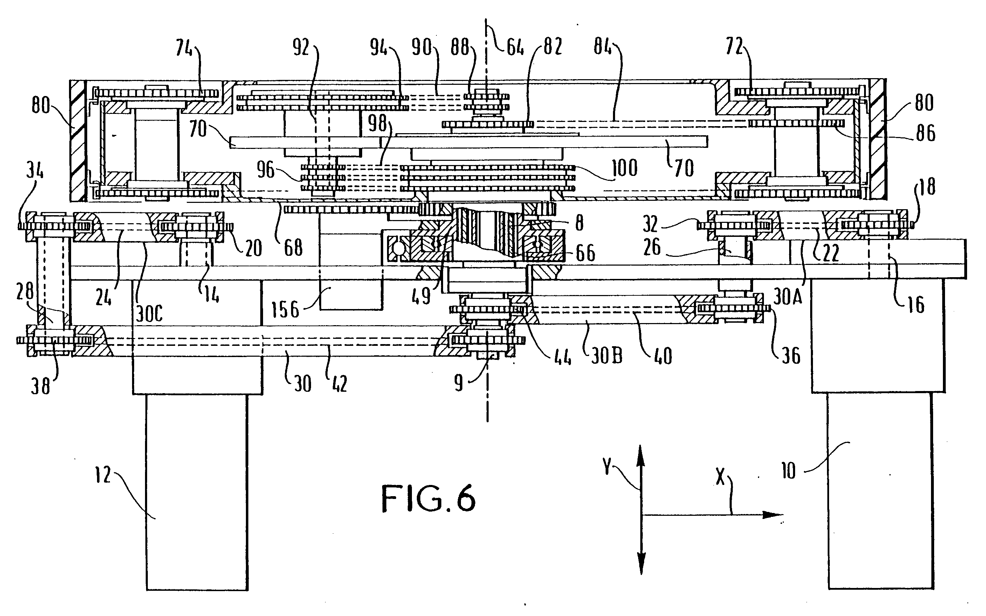

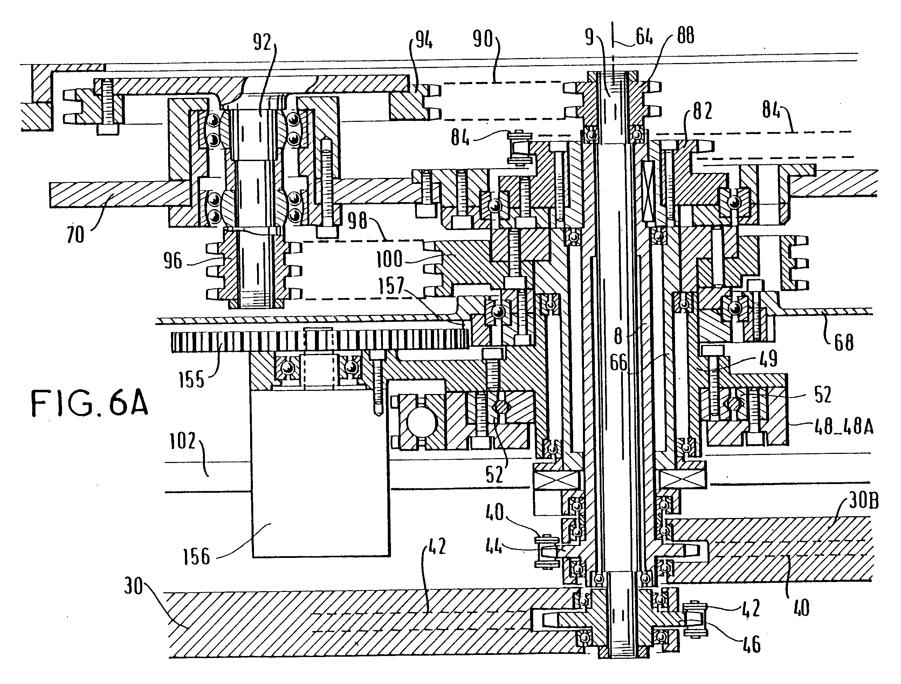

La figure 6 représente une vue de dessus du propulseur de la figure 3, dont la chenille et les éléments de guidage supérieur de celle-ci ont été enlevés.

La figure 6A représente une partie centrale de la figure 6, à échelle agrandie, en vue en coupe par un plan horizontal.

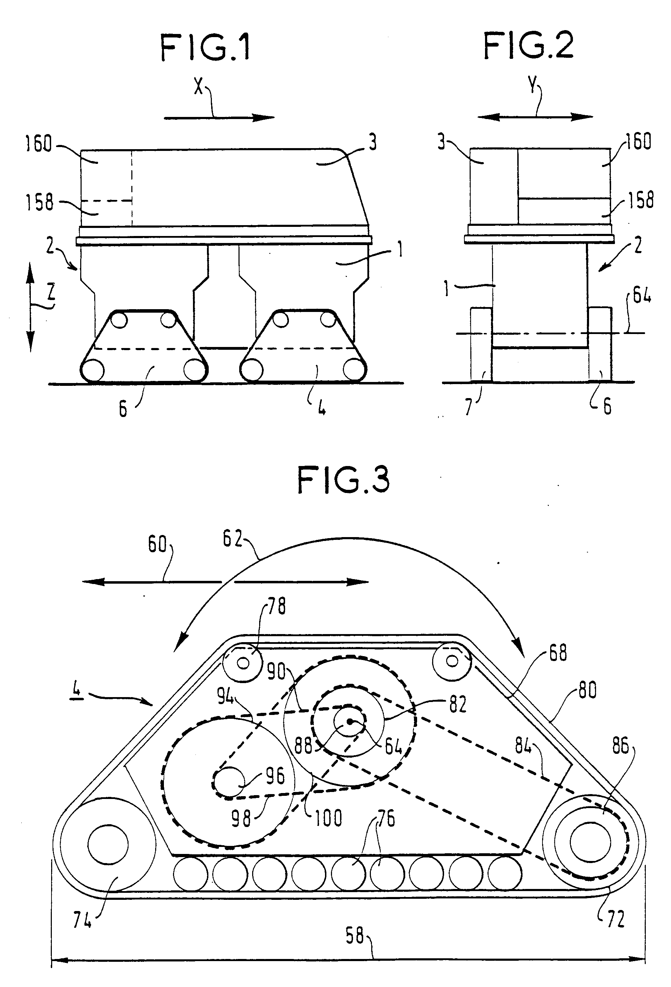

Conformément aux figures 1 et 2, un véhicule autonome selon la présente invention comporte un corps inférieur 1 et un corps supérieur 3 dont l'ensemble constitue un corps de véhicule 2. Le corps inférieur 1 est monté sur quatre propulseurs à chenilles tels que 4, 6 et 7 grâce auxquels il se déplace selon une direction longitudinale X. Il comporte en partie basse des batteries d'alimentation électrique dont le grand poids et la position basse contribuent à sa stabilité. Au dessus de ces batteries sont disposés des moteurs qui seront décrits plus loin et qui actionnent les propulseurs.

Le corps supérieur 3 est plus large que le corps inférieur selon une direction transversale Y. Il comporte des organes relativement légers tels que des moyens de formation de signaux d'appui 158, des moyens de traitement d'information 160, des moyens de communication, des organes électroniques de puissance ainsi que des capteurs exteroceptifs et un système inertiel non représentés. Une direction verticale relative du véhicule est représentée par une flèche Z.

L'encombrement transversal de ce corps supérieur est égal à celui du corps inférieur muni des propulseurs, de manière à disposer d'un volume suffisant sans augmenter l'encombrement transversal du véhicule.

On va maintenant indiquer diverses dispositions avantageuses qui sont toutes adoptées dans ce véhicule, mais dont certaines pourraient être omises tout en conservant les avantages des autres.

Certaines de ces dispositions sont de nature mécanique :
- Des moyens de liaison de propulseurs qui seront décrits plus loin sont portés par ledit corps de véhicule pour porter lesdits propulseurs,
- chacun de ces propulseurs tels que 4 comportant au moins un arbre récepteur transversal 8 s'étendant vers ledit corps de véhicule pour recevoir une énergie mécanique à partir de ce corps sous la forme d'une rotation de cet arbre, de manière à donner à ce propulseur au moins un mouvement d'avance pour assurer la propulsion dudit véhicule,
- ledit véhicule comportant encore des moteurs 10, 12 portés par ledit corps de véhicule pour fournir ladite énergie mécanique à chacun desdits propulseurs sous la forme de la rotation d'un arbre moteur transversal 14, 16 guidé en rotation par rapport audit corps de véhicule,
- et pour chaque dit arbre récepteur, des moyens de transmission externe pour faire entraîner chaque dit arbre récepteur par un dit arbre moteur,
- une disposition avantageuse étant que lesdits moyens de transmission externes pour faire entraîner un dit arbre récepteur 8, 9 par un dit arbre moteur 14, 16 sont essentiellement constitués par un compas de transmission comportant :
- une roue motrice 18, 20 d'axe transversal montée sur ledit arbre moteur,
- un premier élément de transmission linéaire 22, 24 qui s'étend à partir de ladite roue motrice selon une première branche de compas sensiblement perpendiculaire à l'axe de cette roue, et qui est entraîné par cette roue,
- un arbre intermédiaire transversal 26, 28,
- des moyens de maintien d'écartement 30 pour maintenir une première distance entre lesdits arbres moteur 14, 16 et intermédiaire 26, 28, et une deuxième distance entre lesdits arbres intermédiaire et récepteur 8, 9, tout en permettant à ces arbres 26, 28, 8, 9, de se déplacer perpendiculairement à eux-mêmes,
- une roue intermédiaire motrice 32, 34 entraînée par ledit premier élément de transmission linéaire et montée sur ledit arbre intermédiaire pour entraîner celui-ci,
- une roue intermédiaire réceptrice 36, 38 montée sur ledit arbre intermédiaire,
- un deuxième élément de transmission linéaire 40, 42 qui s'étend à partir de ladite roue intermédiaire réceptrice selon une deuxième branche de compas sensiblement perpendiculaire à l'axe de cette roue et qui est entraîné par cette roue,
- et une roue réceptrice 44, 46 entraînée par ledit deuxième élément de transmission linéaire et montée sur ledit arbre récepteur pour entraîner celui-ci.

Dans le véhicule donné en exemple, les roues motrices et réceptrices mentionnées ci-dessus, et d'autres qui seront mentionnées ci-après, sont des pignons dont les dents pénètrent dans les maillons de chaînes qui constituent lesdits éléments de transmission linéaires. Ces derniers pourraient cependant aussi être constitués par des courroies, crantées ou non.
Les moyens de transmission externes sont ainsi réalisés d'une manière simple qui autorise des débattements verticaux et longitudinaux de grandes amplitudes des propulseurs. En même temps la présence de tels moyens de transmission n'augmente pas, ou seulement peu, l'encombrement transversal du véhicule, notamment lorsqu' il s'agit de propulseurs latéraux disposés de part et d'autre du corps de véhicule selon la direction transversale.

Une autre disposition avantageuse est que lesdits moyens de liaison de propulseur comportent pour chaque dit propulseur 4 :
- une structure de portage de propulseur 48 qui est mobile et guidée par rapport audit corps de véhicule 2 pour lui permettre des débattements qui sont des translations de cette structure dans au moins un intervalle de débattement tel que 60 selon une direction de débattement correspondante perpendiculaire à ladite direction transversale Y, cette structure portant ledit propulseur,
- et des moyens de positionnement de propulseur 50 pour imposer à ladite structure de portage de propulseur une position commandée dans un tel intervalle de débattement.

Il peut y avoir soit un intervalle de débattement longitudinal seulement, soit un intervalle de débattement vertical seulement, soit les deux.

Une telle disposition permet une stabilisation continue du véhicule lorsque celui-ci progresse sur un sol présentant des pentes variables.

Une autre disposition avantageuse est que ladite structure de portage de propulseur comporte :
- une structure de guidage vertical par exemple à rails 52 portant ledit propulseur, par l'intermédiaire d'un palier suspendu 49, et guidée verticalement pour lui permettre un déplacement de suspension dans un dit intervalle de débattement qui est vertical,
- et une structure de guidage longitudinal 54 portant ladite structure de guidage vertical par l'intermédiaire de moyens de suspension 56 pour réaliser une suspension dudit véhicule, cette structure de guidage longitudinal étant guidée longitudinalement par rapport audit corps de véhicule 2 pour lui permettre de prendre une dite position commandée dans un dit intervalle de débattement 60 qui est longitudinal, de manière à permettre de stabiliser ledit véhicule par déplacement longitudinal de son centre de gravité par rapport audit propulseur lorsque ce véhicule monte ou descend une pente présentée par le sol sur lequel il progresse.

Une autre disposition avantageuse est que ledit propulseur 4 présente un intervalle d'appui au sol 58 qui s'étend selon ladite direction longitudinale et jusqu'à deux extrémités duquel il peut prendre appui sur le sol pour supporter ledit corps de véhicule,
- ladite structure de portage de propulseur 48 portant ce propulseur en lui permettant d'effectuer sur commande des mouvements d'inclinaison 62 qui sont des rotations autour d'un axe de propulseur 64,
- ledit véhicule comportant, pour chaque dit propulseur 4 :
- un moteur d'avance 10 et un moteur d'inclinaison 12 munis d'un arbre moteur d'avance 14 et d'un arbre moteur d'inclinaison 16 qui sont deux dits arbres moteurs,
- un arbre récepteur d'avance 8 et un arbre récepteur d'inclinaison 9 qui sont deux dits arbres récepteurs et qui s'étendent coaxialement selon ledit axe de propulseur 64,
- et des moyens de transmission externe d'avance 22, 40 et d'inclinaison 24, 42 constitués par deux dits compas de transmission pour faire entraîner lesdits arbres récepteurs d'avance et d'inclinaison par lesdits arbres moteurs d'avance et d'inclinaison, respectivement.

Ledit moteur d'inclinaison constitue un actionneur d'inclinaison de propulseur.

Une inclinaison d'un propulseur peut avoir pour effet de déplacer longitudinalement le point d'appui moyen du propulseur sur le sol et de déplacer verticalement l'axe du propulseur par rapport au sol. Elle a pour but de permettre au véhicule de franchir un obstacle.

Une autre disposition avantageuse est que ladite structure de portage de propulseur 48 comporte un arbre de portage de propulseur 66 s'étendant selon ledit axe de propulseur 64 dudit corps de véhicule 2 jusqu'au dit propulseur 4,
- ce propulseur comportant :
- une carcasse de propulseur 68, 70 guidée en rotation autour dudit arbre de portage 66,
- lesdits arbres récepteurs d'avance 8 et d'inclinaison 9 guidés coaxialement en rotation dans cet arbre de portage,
- un ensemble d'appui de propulseur 72, 74, 76, 80 pour prendre appui sur le sol dans ledit intervalle d'appui au sol 58, cet ensemble comportant au moins une roue d'avance 72 guidée en rotation, par rapport à ladite carcasse de propulseur 68, 70 autour d'un axe transversal,
- des moyens de transmission interne d'avance 82, 84, 86 pour faire entraîner au moins ladite roue d'avance par ledit arbre récepteur d'avance 8 de manière à donner un dit mouvement d'avance audit propulseur,
- et des moyens de transmission interne d'inclinaison 88, 90, 92, 94, 96, 98, 100 portés par ladite carcasse de propulseur, entraînés en rotation par ledit arbre récepteur d'inclinaison, et prenant un appui de rotation sur ledit arbre de portage de propulseur pour donner audit propulseur un dit mouvement d'inclinaison.

Une autre disposition avantageuse est que lesdits moyens de maintien d'écartement pour maintenir une distance entre deux arbres comportent :
- une bielle 30 s'étendant en appui entre ces deux arbres 28, 9 tout en permettant leurs rotations,
- et des moyens de réglage d'écartement pour permettre de donner à cette bielle, soit une longueur de service assurant la tension d'un élément de transmission linéaire souple tel que la chaîne motrice ou réceptrice 42, ou une courroie de transmission assurant la même fonction, soit une longueur de montage plus petite que cette longueur de service pour permettre de monter ou démonter ledit élément de liaison. Ces moyens sont symbolisés par une vis 31 et un écrou 31A. D'autres bielles jouant des rôles analogues sont représentées en 30A, 30B et 30C. Des moyens d'écartement analogues sont associés à ces autres bielles.

Une autre disposition avantageuse est que le véhicule comporte, pour chaque dit propulseur latéral 4, une plaque d'assemblage de propulseur 102 fixée de manière amovible audit corps de véhicule 2, s'étendant selon lesdites directions longitudinale X et verticale Z, et portant lesdits moteurs et arbres moteurs d'avance 10, 14 et d'inclinaison 12, 16, et lesdits moyens de transmission externe d'avance 22, 40 et d'inclinaison 24, 42.

Cette plaque d'assemblage porte la structure de guidage longitudinal telle que 54 qui porte une partie intermédiaire 48A de la structure de portage 48 qui porte elle même la structure de guidage vertical à rails 52. Cette dernière porte un palier suspendu de forme rectangulaire 49 qui est monté en balance, c'est-à-dire avec possibilité de rotation, sur l'arbre de portage 66.

Le véhicule comporte quatre dits propulseurs latéraux avant droit 4, avant gauche, arrière droit 6 et arrière gauche 7, et quatre dites structures de guidage longitudinal avant droit 54, avant gauche, arrière droit 55 et arrière gauche pour ces quatre propulseurs, respectivement. Dans ce cas une autre disposition avantageuse est que lesdits moyens de positionnement de propulseur comportent des moyens de coordination de positions 50, 104 pour coordonner des positions qu'ils commandent à deux dits propulseurs par l'intermédiaire des deux dites structures de guidage horizontal 54, 55 correspondantes.

Une autre disposition avantageuse est que lesdits moyens de positionnement de propulseur comportent, pour chacune des deux paires droite et gauche qui comportent, respectivement, l'une lesdits propulseurs avant droit 4 et arrière droit 6, l'autre lesdits propulseurs avant gauche et arrière gauche 7 :
- une entretoise de liaison 108 longitudinale reliant l'une à l'autre les deux structures de guidage horizontal 54, 55 qui correspondent aux deux propulseurs de cette paire,
- une vis de positionnement longitudinale 104 reliant également ces deux structures de guidage,
- un écrou d'entraînement rotatif 106 coopérant avec cette vis et bloqué longitudinalement par rapport audit corps de véhicule 2,
- et un moteur 50 pour faire tourner ledit écrou d'entraînement.

Ce moteur constitue un actionneur de positionnement de propulseurs communs aux deux dites paires. Il entraîne, par l'intermédiaire d'une chaîne 110, un arbre transversal 112 qui, à chacune de ses deux extrémités, entraîne l'un des deux écrous d'entraînement tels que 106 par l'intermédiaire d'un dispositif à pignons dit "de renvoi d'angle" tel que 114.

Une autre disposition avantageuse est que lesdits moyens de transmission interne d'inclinaison comportent au moins :
- une première roue motrice 88 monté sur ledit arbre récepteur d'inclinaison au-delà dudit arbre de portage 66,
- un premier élément de transmission linéaire 90 entraîné par cette première roue,
- un arbre intermédiaire de transmission interne d'inclinaison 92 qui est transversal et qui est guidé en rotation par rapport à ladite carcasse de propulseur,
- une première roue réceptrice 94 montée sur cet arbre intermédiaire et entraînée par ledit premier élément de transmission linéaire pour entraîner cet arbre en rotation,
- un deuxième roue motrice 96 montée sur cet arbre intermédiaire,
- un deuxième élément de transmission linéaire 98 entraîné par cette deuxième roue motrice,
- et une roue réceptrice d'appui d'inclinaison 100 coopérant avec ce deuxième élément de transmission et fixée, au moins angulairement, sur ledit arbre de portage pour faire tourner ledit arbre intermédiaire et ladite carcasse de propulseur autour de cet arbre de portage de manière à entraîner un dit mouvement d'inclinaison.

Une autre disposition avantageuse est que lesdites roues motrices 88 et 96 des moyens de transmission interne d'inclinaison présentent des diamètres plus petits que lesdites roues réceptrices 94 et 100 de manière que ces moyens de transmission constituent un réducteur de vitesse pour donner audit mouvement d'inclinaison une vitesse de rotation inférieure à celle dudit arbre récepteur d'inclinaison, afin de limiter les efforts qui doivent être appliqués par ledit moteur d'inclinaison 12 auxdits moyens de transmission externe, pour entraîner ledit mouvement d'inclinaison.

Dans ces moyens de transmission interne, comme dans les moyens de transmission externes, les roues motrices et réceptrices sont constituées par des pignons et lesdits éléments de transmission linéaires par des chaînes.

Une autre disposition est que ledit ensemble d'appui au sol de chaque dit propulseur latéral comporte :
- une chenille 80 prenant appui sur le sol,
- des moyens 72, 74, 76, 78 pour guider cette chenille,
- et une roue d'avance 72 tournant autour d'un axe transversal pour entraîner cette chenille.

Cet ensemble comporte plus précisément la roue d'avance 72 et une roue de guidage 74 aux deux extrémités dudit intervalle d'appui, des galets d'appui intermédiaires tels que 76, et des galets de renvoi tels que 78 pour guider la chenille 80 qui est seule au contact du sol. Cette chenille est crantée intérieurement, les roues 72 et 74 constituant des pignons dont les dents s'engagent entre les crans de la chenille.

Une autre disposition avantageuse est que lesdits moyens de transmission interne d'avance comportent :
- une roue motrice telle qu'un premier pignon 82 porté par ledit arbre récepteur d'avance 8 au-delà dudit arbre de portage 66,
- un élément de transmission linéaire tel qu'une chaîne 84 entraînée par ce premier pignon,
- et une roue réceptrice telle qu'un deuxième pignon 86 solidaire de ladite roue d'avance 72 et entraîné par cette chaîne pour entraîner un dit mouvement d'avance du propulseur 4.

Les diamètres de ces deux roues sont représentés égaux mais pourraient être différents, par exemple pour constituer un réducteur de vitesse.

D'autres dispositions avantageuses adoptées dans le même véhicule concernent les moyens de mesure et de traitement de signaux dont ce véhicule est équipé. On rappellera tout d'abord à ce sujet que chaque propulseur prend appui sur le sol en lui appliquant un ensemble de forces qui peut être représenté utilement, au moins partiellement par un certain nombre de paramètres. Ces derniers seront appelés ci-après paramètres d'appui".

Une de ces dispositions avantageuses est que, pour déterminer un certain nombre de paramètres d'appui au sol d'un dit propulseur 4, on forme des signaux d'efforts représentatifs d'efforts appliqués à ce propulseur à partir de ce corps de véhicule 2, et on traite ces signaux d'efforts pour former des signaux d'appui représentatifs des paramètres d'appui à déterminer.

Plus particulièrement on forme au moins trois dits signaux d'efforts représentatifs d'efforts appliqués à un dit propulseur 4 à partir dudit corps de véhicule 2, et on traite ces signaux d'efforts pour former trois dits signaux d'appui représentant trois dits paramètres d'appui qui représentent eux-mêmes la composante de ladite force d'appui de ce propulseur dans un plan vertical longitudinal.

Pour cela, le véhicule comporte des capteurs d'efforts 150, 152, 154 pour former lesdits signaux d'efforts,
- et des moyens de formation de signaux d'appui 158 recevant et traitant notamment ces signaux d'efforts pour former lesdits signaux d'appui. Lesdits signaux d'appui représentent par exemple ladite composante de ladite force d'appui par son inclinaison, la position longitudinale de son point d'application au sol, et une intensité.

Une autre disposition avantageuse est que ledit arbre de portage 66 est monté dans le palier suspendu 49 qui fait partie de la structure de portage 48 de manière à être guidé en rotation autour dudit axe de propulseur 64. Plus particulièrement, l'arbre de portage 66 est monté en balance dans le palier suspendu 49 qui est guidé verticalement par rapport à la structure de portage 48 par l'intermédiaire de la structure de guidage vertical 52. Le véhicule comporte alors un capteur d'effort d'inclinaison 152 qui est un dit capteur d'effort et qui est monté entre ledit arbre de portage et une partie non rotative de la structure de portage de manière à empêcher la rotation de cet arbre et à fournir un signal d'effort d'inclinaison représentatif d'un moment d'inclinaison appliqué audit propulseur 4 par ledit corps de véhicule 2.

Une autre disposition avantageuse est qu'un capteur d'effort d'avance 154 est associé audit moteur d'avance 10 ou auxdits moyens de transmission externe d'avance 22, 40 pour fournir un signal d'effort d'avance représentatif du couple d'avance appliqué par ces moyens de transmission externe d'avance audit arbre récepteur d'avance 8, de manière que ce signal d'effort puisse être utilisé pour déterminer la composante tangentielle au propulseur dans un plan vertical longitudinal de ladite force d'appui.

Une autre disposition avantageuse est qu'un capteur d'effort vertical 150 est associé à cette structure de guidage vertical pour fournir un signal d'effort vertical représentant un effort vertical relatif appliqué audit propulseur 4 par ledit corps de véhicule 2 selon une direction verticale relative liée à ce corps de véhicule, de manière que ce signal d'effort vertical puisse être utilisé pour déterminer la composante de ladite force d'appui, normale à la surface d'appui du propulseur.

Une autre disposition avantageuse est que ledit véhicule comporte en outre des capteurs de configuration 156 pour fournir des signaux de configuration représentatifs de paramètres de configuration tels que la position et/ou l'inclinaison de chacun desdits propulseurs par rapport audit corps de véhicule 2 et/ou l'orientation de ce corps de véhicule par rapport à la verticale, lesdits moyens de formation de signaux d'appui 158 recevant et traitant aussi ces signaux de configuration pour former lesdits signaux d'appui.

L'un desdits capteurs de configuration est un capteur d'inclinaison 156 porté par le corps de véhicule 2. Il mesure, par l'intermédiaire d'un pignon 155 qui lui est coaxial et coopère avec un pignon 157 solidaire de la carcasse 70 du propulseur 4, la rotation de cette carcasse autour de l'axe de propulseur 64. Il fournit un signal d'inclinaison de propulseur représentatif de l'inclinaison du propulseur par rapport au corps du véhicule.

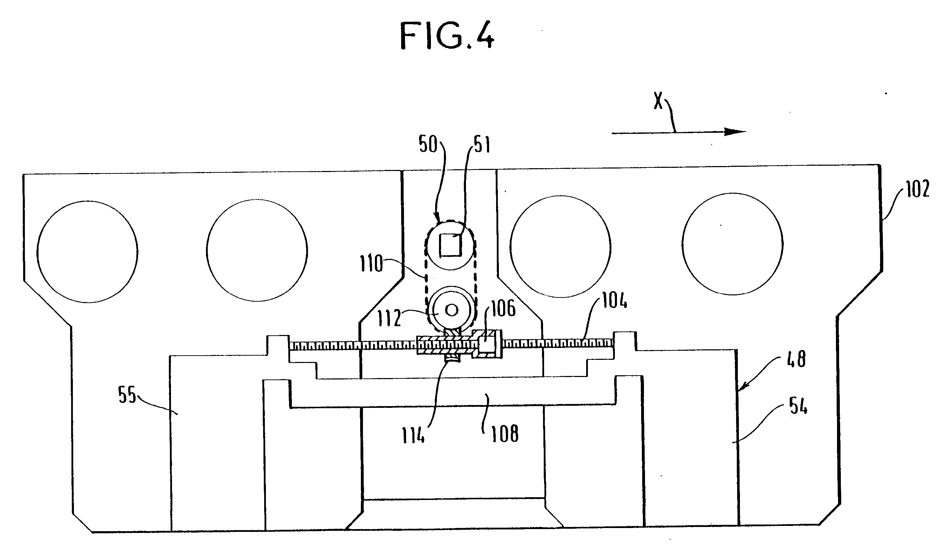

Un autre desdits capteurs de configuration est un capteur de position longitudinale 51 (voir figure 4) qui mesure la position longitudinale de l'ensemble desdits propulseurs par rapport au corps de véhicule 2 et fournit un signal de position longitudinale.

Il est apparu de ce qui précède que ledit véhicule comportait des actionneurs de déplacement de propulseurs 12, 50 pour déplacer lesdits propulseurs par rapport audit corps de véhicule, et des moyens de formation de signaux d'appui représentatifs desdits paramètres d'appui.

Une autre disposition avantageuse est qu'il comporte en outre des moyens de commande de sûreté faisant partie des moyens de traitement d'information 160 et utilisant ces signaux d'appui pour commander lesdits actionneurs de déplacement de manière à améliorer la sûreté du véhicule.

Ces actionneurs de déplacement comportent ledit actionneur de positionnement constitué par le moteur 50 et les quatre actionneurs d'inclinaison constitués par les quatre moteurs d'inclinaison tels que 12.

Une autre disposition avantageuse est que lesdits moyens de commande de sûreté 160 utilisent non seulement lesdits signaux d'appui, mais aussi des signaux de vitesses représentatifs de vitesses desdits propulseurs 4, ledit véhicule comportant des capteurs de vitesse pour fournir ces signaux.

Une autre disposition avantageuse est que lesdits moyens de commande de sûreté 160 commandent non seulement lesdits actionneurs de déplacement 12, 50 mais aussi lesdits moteurs d'avance 10. Plus précisément, ces moyens de commande évaluent à chaque instant, d'une part, un degré de sûreté actuel, c'est-à-dire qu'ils déterminent en temps réel les valeurs de paramètres de sûreté représentatifs notamment de la stabilité et de l'adhérence du véhicule. Cette détermination résulte notamment de celle de certains desdits paramètres d'appui. La stabilité dépend par exemple de la position de la projection verticale du centre de gravité dans le polygone de sustentation défini par les points d'appui des propulseurs. L'adhérence dépend pour chacun de ces propulseurs de l'inclinaison de la force d'appui que cet organe applique contre le sol par rapport à une surface d'appui. Les moyens de commande 160 évaluent d'autre part, notamment, l'influence que des déplacements des propulseurs ou des variations de couples d'avance auraient sur les paramètres de sûreté. Enfin ils élaborent des ordres pour optimiser ces paramètres de sûreté.

## Revendications

1. Véhicule d'intervention à configuration variable pour sols accidentés, comportant:
- un corps de véhicule (2) présentant une longueur et une largeur selon des directions longitudinale (X) et transversale (Y), respectivement,
- des propulseurs (4, 6) portés par ledit corps de véhicule et prenant appui sur le sol pour propulser ledit véhicule selon ladite direction longitudinale,
- une structure de portage (48) pour porter au moins un dit propulseur (4), cette structure étant mobile et comportant une structure de guidage longitudinal (54) guidée longitudinalement par rapport audit corps de véhicule (2) et entraînée par un actionneur de positionnement (50) pour lui donner une position commandée dans un intervalle de débattement (60) longitudinal,
- ce véhicule étant caractérisé par le fait qu'il comporte une dite structure de portage (48) pour chaque dit propulseur (4), cette structure comportant en outre une structure de guidage vertical (52) portant ledit propulseur et guidée verticalement pour lui permettre un déplacement dans un intervalle de débattement vertical,
- ladite structure de guidage longitudinal (54) portant ladite structure de guidage vertical par l'intermédiaire de moyens de suspension (56) pour réaliser une suspension dudit véhicule.

2. Véhicule selon la revendication 1, caractérisé par le fait que ledit propulseur (4) présente un intervalle d'appui au sol (58) qui s'étend selon ladite direction longitudinale et jusqu'à deux extrémités duquel il peut prendre appui sur le sol en lui appliquant des forces d'appui pour supporter ledit corps de véhicule (2),
- ladite structure de portage (48) portant ce propulseur en lui permettant d'effectuer sur commande des mouvements d'inclinaison (62) qui sont des rotations autour d'un axe de propulseur transversal (64),
- ledit véhicule comportant, pour chaque dit propulseur (4):
- un moteur d'avance (10) pour faire avancer ce propulseur sur le sol,
- et un moteur d'inclinaison (12) pour entraîner lesdits mouvements d'inclinaison de ce propulseur.

3. Véhicule selon la revendication 2, caractérisé par le fait qu'il comporte des moyens de commande de sûreté (160) commandant au moins ledit actionneur de positionnement en réponse d'une part à des signaux d'appui représentatifs desdites forces d'appui, d'autre part à des signaux de déplacement et/ou de vitesses représentatifs de déplacements et/ou de vitesses desdits propulseurs (4), ledit véhicule comportant des capteurs de déplacement (51, 156) et/ou de vitesse pour fournir ces signaux.

4. Véhicule selon la revendication 3, caractérisé par le fait que lesdits moyens de commande de sûreté (160) commandent non seulement lesdits actionneurs de positionnement (50) mais aussi lesdits moteurs d'avance (10) et d'inclinaison (12).

## Patentansprüche

1. Rettungsfahrzeug mit variabler Konfiguration für ein Gelände mit Hindernissen, das folgende Komponenten aufweist:
- einen Fahrzeugrumpf (2), der eine Länge und eine Breite entlang der Längsrichtung (X) bzw. der Querrichtung (Y) aufweist,
- Fahrwerke (4, 6), die vom Fahrzeugrumpf getragen werden und sich auf dem Boden abstützen, um das Fahrzeug in Längsrichtung anzutreiben,
- eine Tragstruktur (48) zum Tragen mindestens eines der Fahrwerke (4), wobei die Struktur beweglich ist und eine Längsführungsstruktur (54) aufweist, die in Längsrichtung relativ zum Fahrzeugrumpf (2) geführt und von einem Positionsbetätigungsorgan (50) verschoben wird, um ihr eine gesteuerte Position in einem Längsverschiebungsintervall (60) zu erteilen, dadurch gekennzeichnet, daß das Fahrzeug eine Tragstruktur (48) für jedes Fahrwerk (4) aufweist und diese Struktur weiter eine Vertikalführungsstruktur (52) enthält, die das Fahrwerk trägt und in der Senkrechten geführt wird, um dem Fahrwerk eine Verschiebung innerhalb eines senkrechten Verschiebungsintervalls zu ermöglichen,
und daß die Längsführungsstruktur (54) die Vertikalführungsstruktur über Aufhängemittel (56) trägt, um ein Aufhängung des Fahrzeugs zu schaffen.

2. Fahrzeug nach Anspruch 1, dadurch gekennzeichnet, daß das Fahrwerk (4) eine Bodenberührungslänge (58) besitzt, die sich in Längsrichtung erstreckt und bis zu deren beiden Enden sich das Fahrwerk auf dem Boden abstützen kann, wobei es auf diesen Boden Abstützkräfte ausübt, um den Fahrzeugrumpf (2) zu tragen,
daß die das Fahrwerk tragende Tragstruktur (48) das Fahrwerk gesteuerte Schrägstellungsbewegungen (62) durchführen läßt, bei denen es sich um Drehungen um eine querliegende Fahrwerksachse (64) handelt,
und daß das Fahrzeug für jedes Fahrwerk (4) aufweist:
- einen Vorwärtsbewegungsmotor (10) zum Vorwärtsbewegen des Fahrwerks auf dem Boden,
- und einen Schrägstellungsmotor (12), um die Schrägstellungsbewegungen des Fahrwerks herbeizuführen.

3. Fahrzeug nach Anspruch 2, dadurch gekennzeichnet, daß es Sicherheitssteuereinrichtungen (160) aufweist, die mindestens das Positionierungsorgan steuern, und zwar einerseits aufgrund von Abstützsignalen, die die Abstützkräfte darstellen, und andererseits aufgrund von Verschiebungssignalen und/ oder Geschwindigkeitssignalen, die die Verschiebungen und/oder Geschwindigkeiten der Fahrwerke (4) darstellen, wobei das Fahrzeug Verschiebungssensoren (51) und/oder Geschwindigkeitssensoren (156) aufweist, die diese Signale liefern.

4. Fahrzeug nach Anspruch 3, dadurch gekennzeichnet, daß die Sicherheitssteuereinrichtungen (160) nicht nur die Positionierungsorgane (50), sondern auch die Vorwärtsbewegungs- und Schrägstellungsmotoren (10) bzw. (12) steuern.

## Claims

1. A variable configuration intervention vehicle for rough ground, comprising:
. a vehicle body (2); having a length and a width respectively in a longitudinal direction and in a transverse direction (Y);
. propulsion units (4, 6) carried by the said vehicle body and bearing against the ground to propel the said vehicle along said longitudinal direction;
. a carrying structure (48) for carrying at least one of said propulsion units (4), said structure being movable and including a longitudinal guide structure (54) guided longitudinally relative to said vehicle body (2) and being driven by a positioning actuator (50) to impart a controlled position thereto within a longitudinal displacement range (60);
. the vehicle being characterized by the fact that it includes a said carrying structure (48) for each said propulsion unit (4), said structure also including a vertical guide structure (52) carrying said propulsion unit and guided vertically to provide it with displacement in a displacement range which is vertical;
. the said longitudinal guide structure (54) carrying said vertical guide structure by means of suspension means (56) for suspending said vehicle.

2. A vehicle according to claim 1, characterized by the fact that said propulsion unit (4) has a ground support distance (58) which extends along said longitudinal direction and is capable of standing on the ground anywhere between the two ends thereof and applying forces to support the said vehicle body (2)
. said propulsion unit carrying structure (48) carrying said propulsion unit while enabling it to perform tilting movements on command (62) which are constituted by rotation about a transverse propulsion unit axis (64);
. said vehicle comprising, for each of said propulsion units (4):
. said advance motor (10); for advancing the propulsion unit over the ground; and
. a tilting motor (12) for driving said tilting movements of the propulsion unit.

3. A vehicle according to claim 2, characterized by the fact that it includes safety control means (160) controlling at least the said positioning actuator, partly in response to support signals representative of the said support forces, and partly in response to displacement and/or speed signals representative of displacements and/or speeds of said propulsion units (4), said vehicle including displacement and/or speed sensors (51, 156) for providing said signals.

4. A vehicle according to claim 3, characterized by the fact that said safety control means (160) control not only said displacement actuators (50) but also said advance and tilting motors (10, 12).
